# EUROPEAN PATENT SPECIFICATION

(11) **EP 3 738 847 B1**
(45) Date of publication and mention of the grant of the patent: **11.01.2023**
(21) Application number: 19174949.8
(22) Date of filing: 16.05.2019
(51) Int. Cl.: B60T 17/08

(54) **SPRING BRAKE ACTUATOR FOR A VEHICLE, IN PARTICULAR A COMMERCIAL VEHICLE**
FEDERBREMSAKTUATOR FÜR EIN FAHRZEUG, INSBESONDERE EIN NUTZFAHRZEUG
ACTIONNEUR DE FREIN À RESSORT POUR VÉHICULE, EN PARTICULIER UN VÉHICULE UTILITAIRE

(43) Date of publication of application: 18.11.2020
(73) Proprietor: ZF CV Systems Europe BV, 1170 Brussels (BE)
(72) Inventor: Zbylut, Michal, 42-400 Zawiercie (PL)
(74) Representative: Copi, Joachim

(56) References cited:
- WO-A1-98/32642
- WO-A2-2009/085024

## Description

The invention relates to a spring brake actuator for a vehicle, in particular a commercial vehicle, comprising a spring brake portion and a service brake portion, wherein the spring brake portion comprises a spring chamber and a compression spring mounted within the spring chamber, wherein the compression spring is configured to generate a spring brake force, the service brake portion comprises a pressure chamber and a non-pressure chamber separated from the pressure chamber by a diaphragm, and wherein the diaphragm is elastically deformable upon pressure inside the pressure chamber.

Spring brake actuators of the aforementioned type a widely used in the vehicle industry, in particular for providing brake performance to commercial vehicles such as trucks, busses and the like. In the aforementioned actuators, the spring brake portion (also commonly referred to as spring portion or spring part), is responsible for generating braking force for parking brake or emergency brake functions, whereas the service brake portion is responsible for generating the "regular" brake force during operation of the vehicle. Typically, the spring brake portion comprises a piston chamber and a spring brake piston inside the piston chamber that sealingly abuts against a piston chamber wall and is mounted inside the piston chamber. The spring brake piston defines on one hand side the spring chamber housing the compression spring and on the other hand side a spring brake pressure chamber that is connectable through a fluid port with a pressure source, commonly referred to as port 12. In its normal state, the spring brake pressure chamber is pressurized, thus holding the compression spring in a compressed state and the spring brake piston in a retained position. In this state, no braking force is transferred by the spring brake actuator to the externally coupled brake mechanism.

When the pressure in the spring brake pressure chamber is released, i.e. vented, the compression spring is allowed to expand into an extended position, moving the spring brake piston which leads to a transmission of braking force to the brake mechanism.

The service portion of the spring brake actuator comprises a push rod that is configured to be displaced slidingly by the spring brake piston in the aforementioned scenario. Also, the push rod is configured to be moved as a function of increasing pressure in the pressure chamber of the service brake portion which is in fluid communication with a pressure source of the vehicle through a fluid port, commonly referred to as port 11. When the pressure chamber is pressurized, the diaphragm that separates the pressure chamber from the non-pressure chamber is deformed, thus increasing the volume of the pressure chamber and simultaneously decreasing the volume of the non-pressure chamber. The push rod which is mounted inside the non-pressure chamber is displaced by the diaphragm and causes the transmission of force to the brake mechanism.

In order to prevent unwanted pressure build-up inside the non-pressure chamber, and unwanted build-up of a vacuum inside the spring chamber upon a quick movement of the spring brake piston, the non-pressure chamber and the spring chamber require a venting system. In the prior art, ventilation of the spring chamber has according to one concept been achieved by internal breather valves. Those internal breather valves generally function satisfactorily, but are geometrically complicated and expensive to manufacture. The amount of air flow that can pass through the established internal breather valves is limited.

As an alternative to internal breather valves, some spring brake actuators have in the past been equipped with external breathing pipes which fluidly connect the spring chamber to the non-pressure chamber of the service brake portion and allow for a transport of fluid between those two compartments. While also these systems technically function in satisfactory manner, the external piping requires a significant amount of space and, depending on the mounting situation inside the vehicle, a large number of actuator housing variants are required to satisfy customer needs.

WO 9832642 A1 shows a spring brake actuator with an internal venting system between a first spring chamber, a second spring chamber and the external environment. The Spring brake actuator has vent openings in the housing communicating with the second spring chamber. Weep holes in a sleeve of an push rod, in a spring brake actuator rod, and in a spring brake housing portion together permit fluid compressed in a first service brake chamber to flow through a conduit define by these weep holes out of the brake actuator.

It was therefore an object of the invention to provide a spring brake actuator that overcomes the aforementioned issues as much as possible. In particular, it was an object of the invention to provide an improved spring brake actuator that reliably provides a venting between the spring chamber and the non-pressure chamber and also is space- as well as cost-efficient. At least, it was an object of the invention to suggest an alternative spring brake actuator.

The invention achieves the aforementioned object by suggesting a spring brake actuator of the initially mentioned type wherein the spring chamber of the spring brake portion and the non-pressure chamber of the service portion are connected by at least one ventilation conduit to be in fluid communication with each other, wherein the ventilation conduit extends completely inside the spring brake actuator. The invention is based upon the realization that instead of a complicated valve part inside the actuator, a rather simple conduit can provide for reliable fluid exchange between the spring chamber and the non-pressure chamber of the spring brake actuator.

Particularly preferred, the inventive ventilation conduit is free of valve elements.

The ventilation conduit can be designed with a desired amount of free cross section to allow for a desired flow resistance as is required by the respective application. That way, particular flow resistance elements such as diffusers, throttles etc. are no longer required. Also, by completely arranging the ventilation conduit inside the brake actuator housing, no external pipings are required anylonger, which leads to uniform outside design of the brake actuator, greatly enhancing the mounting capabilities on different types of vehicles.

In a preferred embodiment of the invention, the ventilation conduit bypasses the pressure chamber. In the prior art, internal breather valves have been used to provide ventilation for the spring chamber. However, ventilation was always conducted through the pressure chamber of the service portion which is potentially detrimental in scenarios where the emergency brake/ parking brake function and a service brake function are effected at the same time. By bypassing the pressure chamber of the service brake portion, the ventilation function of the spring chamber is completely independent of the service brake operation. The service brake portion may comprise additional ventilation means for scenarios in which the service brake is operated without the spring brake portion being activated.

In addition the invention achieves the aforementioned object by, the spring brake portion comprises a piston chamber and a spring brake piston that sealingly abuts against the piston chamber wall, is mounted inside the piston chamber and is slidably movable between a retained position and an extended position, and the spring brake portion further comprises a piston pipe that is coupled to the spring brake piston wherein the ventilation conduit runs inside the piston pipe. Preferably, the piston pipe comprises an inner volume that is in fluid communication with the spring chamber. In embodiments that additionally comprise a quick release mechanism for the spring brake piston, a gap, i.e. clearance, is preferably formed between the quick release mechanism and the inside wall of the piston pipe, wherein said gap forms part of the ventilation conduit.

The ventilation conduit preferably also bypasses the spring brake pressure chamber of the spring brake actuator.

According to a further preferred embodiment, the spring brake portion and the service brake portion are mounted to a connecting flange, and the ventilation conduit runs inside the connecting flange.

Preferably, the connecting flange slidably and sealingly holds the piston pipe, and a sealed cavity is formed in-between the piston pipe and the connecting flange, wherein the sealed cavity forms part of the ventilation conduit. The cavity is preferably sealed off against the piston pipe by lip seals provided on opposing end portions of a radial inner recess in the connecting flange.

Preferably, the piston pipe comprises at least one passage opening that extends from inside the piston pipe through to the connecting flange and forms part of the ventilation conduit. Preferably, the passage opening is aligned such that it opens into the sealed cavity between the piston pipe and the connecting flange both in the retained position and in the extended position of the spring brake piston. In that way, fluid exchange between the non-pressure chamber of the service brake portion and the spring chamber of the spring brake portion is always ensured.

In a further preferred embodiment, the connecting flange comprises at least one channel that is in fluid communication with the piston pipe, extends radially outwards to a mounting interface for the diaphragm, and forms part of the ventilation conduit. Preferably, the at least one channel comprises a first channel portion that extends strictly radially, and a second channel portion oriented at an angle to the first channel section, following the contour of the connecting flange outwards. The term "radially outwards" is understood to mean having at least one component in the radial direction, thus encompassing also an orientation that is at an angle of larger than 0° with respect to the longitudinal axis of the connecting flange. The longitudinal axis of the connecting flange is understood to refer to the axis of movement of the spring brake piston, i.e. the stroke direction.

In a further preferred embodiment, the diaphragm of the service brake portion comprises a radial outer end portion that is sealingly attached to the mounting interface of the connecting flange, and at least one passage opening provided in the radial outer end portion and forming part of the ventilation conduit. Accordingly, the ventilation conduit bypasses the pressure chamber of the service brake portion by extending radially outwards past the pressure chamber which is sealed off by the diaphragm inside the spring brake actuator.

Preferably, the diaphragm is sealingly pressed against the mounting interface by a pressure ring, wherein the pressure ring is positioned radially inwards of the at least one passage opening of the diaphragm.

By positioning the pressure ring radially inwards of the passage openings, the diaphragm is reliably held in a sealed state with respect to the pressure chamber without interfering with the ventilation conduit.

In a further preferred embodiment, the service brake portion comprises a housing part that is fixedly attached to the connecting flange. Preferably, the housing part has a plurality of projections that extend inwardly away from the housing part towards the pressure ring and press the pressure ring towards the diaphragm in the mounted state. The projections preferably are formed as ribs or tabs on the inside wall of the housing part of the service brake portion. Further preferred, a plurality of projections is equidistantly distributed along the circumference of the housing part to ensure a reliable sealing effect across the entire circumference of the pressure ring towards the diaphragm.

The pressure ring preferably is made from a rigid material such as spring steel. The more rigid the pressure ring is designed, the fewer projections may be used to ensure reliable sealing. A particularly preferred embodiment, at least three projections are used for pressing the pressure ring against the diaphragm.

Preferably, the diaphragm, the housing part of the service portion and the connecting flange are sealingly clamped together, in particular by a clamp ring.

In a further preferred embodiment, the connecting flange and the housing part of the service brake portion are shaped such that they form a substantially annular, e.g. toroidal, chamber in between them, wherein the annular chamber forms part of the ventilation conduit. By having the chamber extend along the circumference of the actuator, fluid which is vented through the ventilation conduit is able to distribute in the circumferential direction when passing from the diaphragm openings into the non-pressure chamber and vice versa. The opening passages which extend radially outwards of the pressure chamber and of the pressure ring in the respective embodiment open directly into the annular chamber and the non-pressure chamber. A further advantage of providing the "toroidal" chamber between flange and housing part is that the position of the housing part can be independent from the rest of the device, and in particular with respect to the venting channels.

In a further preferred embodiment, the spring brake portion has a service brake piston, the service brake piston being positioned adjacent to the diaphragm and having a recess configured to receive a portion of the diaphragm and the piston pipe of the spring brake piston. The recess is thus preferably located centrally on the service brake piston with respect to the longitudinal access of the spring brake piston and the longitudinal access of the service brake piston which, particularly preferred, are aligned coaxially. By providing the recess in the service brake piston, the entire design of the spring brake actuator can be held even more compact in the longitudinal direction (which is the stroke direction) of the push rod, service piston and spring brake piston of the spring brake actuator. Also, the recess helps in positioning the service brake piston and helps to keep the service brake piston centered with respect to the diaphragm.

The service brake piston is preferably coupled to a push rod that is configured to reciprocate between a retained position and an extended position, wherein the push rod is configured to be coupled to an external brake mechanism. Preferably, the service brake portion comprises a return spring that is mounted inside the service brake portion and effective to bias the service brake piston towards the diaphragm. Particularly preferred, the connecting flange partially extends into the recess provided in the service brake piston when the service brake piston is in a retained position. By extending the connecting flange, and in particular its radial inner portion containing the recess for slidingly supporting the piston pipe, towards the service brake portion, the placement of the ventilation conduit through the flange can be optimized, since the sealing element, e.g. lip seal, which closes off the sealed cavity on the side facing the service brake portion can be arranged at a slight distance to the section where the at least one channel extending radially outwards along the flange opens into the sealed cavity. That way, the sealing element does not interfere with the ventilation conduit.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:
- Fig. 1: a schematic cross-sectional view of a spring brake actuator according to the preferred embodiment,
- Fig. 2: a detail view of the spring brake actuator of figure 1,
- Fig. 3: a further detail view of the spring brake actuator according to figures 1 and 2, and
- Fig. 4: a further detailed view of the spring brake actuator according to figures 1 to 3.

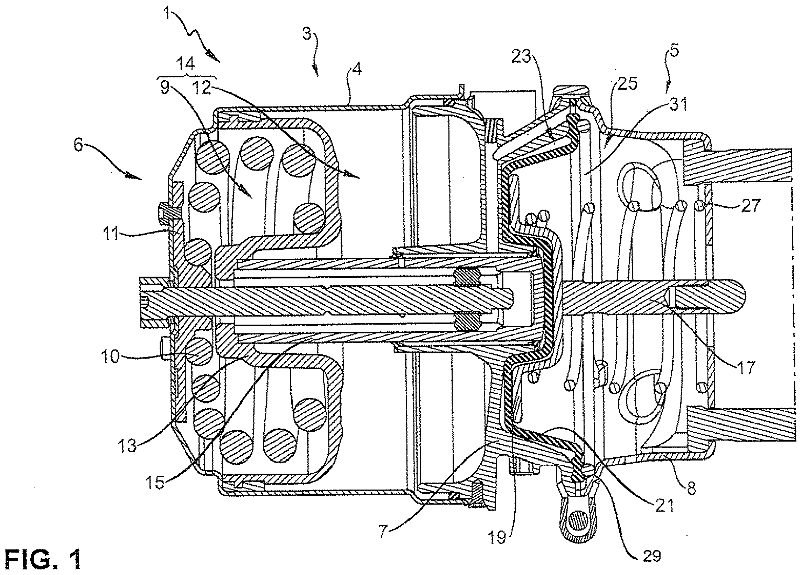

Figure 1 depicts a spring brake actuator 1 according to the invention. The spring brake actuator 1 comprises a spring brake portion 3 and a service brake portion 5. The spring brake portion 3 and the service portion 5 are connected to a connecting flange 7 and together form the spring brake actuator 1.

The spring brake portion 3 comprises a housing part 4. Inside the housing part 4, a piston chamber 14 is arranged which is divided into a spring chamber 9 and a spring brake pressure chamber 12. A compression spring 10 is mounted inside the spring chamber 9 and held in place by a spring seat 11 mounted to the base 6. The spring chamber 9 and spring brake pressure chamber 12 are separated from one another by a spring brake piston 13 which is reciprocatingly movable between a (shown) retained position and a (not shown) extended position. The spring brake piston 13 is coupled to a piston pipe 15 that is slidably held by the connecting flange 7.

The service brake portion 5 comprises a housing part 8 and a push rod 17 that is configured to reciprocatingly move between a (shown) retained position and a (not shown) extended position and that can be coupled to an external brake mechanism for transmitting the brake force generated by the spring brake actuator 1 to said brake mechanism.

The push rod 17 is coupled to a service brake piston 19 which is biased by a return spring 7 towards a diaphragm 21. The diaphragm 21 sealingly separates a pressure chamber 23 from a non-pressure chamber 25 of the service brake portion 5. The pressure chamber 23 is defined between the diaphragm 21 and the connecting flange 7 and it elastically deformable as a function of pressure inside the pressure chamber 23. The diaphragm 21 is sealingly pressed against the connecting flange 7 by a number of projections 29 which inwardly extend from the housing part 8 and push a pressure ring 31 against the diaphragm 21.

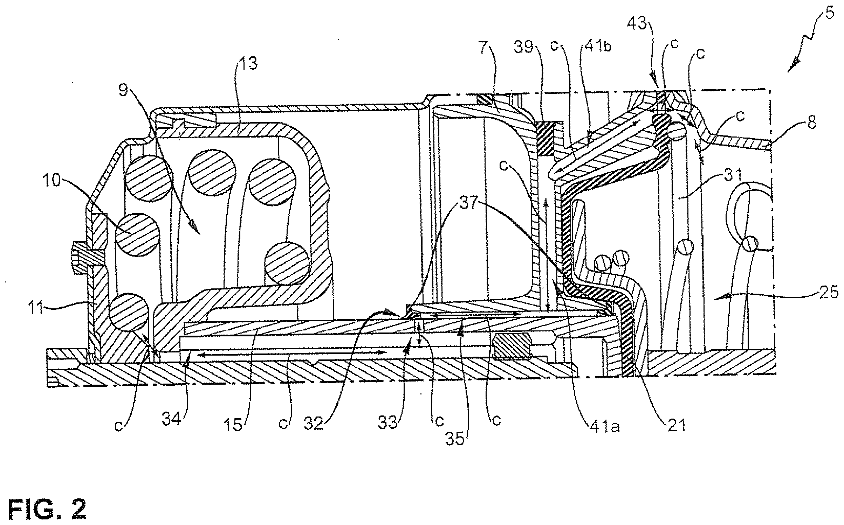

Figure 2 shows in more detail the ventilation conduit between the spring chamber 9 and the non-pressure chamber 25:
The spring chamber 9 is in fluid communication with an inside volume 34 of the piston pipe 15. The piston pipe 15 comprises a number of, preferably three or more, passage openings 33 which extend radially from the inside volume 34 to the periphery of the piston pipe 15.

The passage openings 33 open into a cavity 35 which is formed between the piston pipe 15 and the connecting flange 7 and sealed off by sealing elements 37, e.g. lip seals, on both end portions of the connecting flange 7.

The connecting flange 7 has a radial inner end portion having a recess 32 which slidably and sealingly holds the piston pipe 15 with the help of the sealing elements 37.

At least one channel 41a,b is formed inside the connecting flange 7. The fluid channels comprise a first channel section 41a extending radially away from the sealed cavity 35 and a second channel section 41b extending at an angle to the radial direction towards the service brake portion 5 of the spring brake actuator Optionally, the at least one channel 41a,b comprises a lateral opening 39 which is closed with a corresponding closing element such as a sealed screw.

The at least one channel 41a,b opens into at least one of passage opening 43 in the diaphragm 21. The passage opening 43, in turn, opens into the non-pressure chamber 25. The passage between the spring chamber 9 and the inside volume 34 of the piston pipe 15, the passage opening 33, the sealed cavity 35 between the connecting flange 7 and the piston pipe 15, the channels 41a,b in the connecting flange 7, and the passage opening 43 in the diaphragm 21 all form part of a ventilation conduit c . Fluid, e.g. air, can pass bidirectionally between the non-pressure chamber 25 and the spring chamber 9.

The dimensions of the respective clearances in-between the aforementioned parts are to be chosen according to need of the respective application. Preferably, a number of three or more passage openings 33 with a diameter of at least 3 mm each are provided for optimal air flow. The channel 41a,b in the connecting flange 7 preferably has a diameter of 6 mm or more. The outer diameter of the piston pipe 15 preferably is in the range of 35 through 42 mm, and the inner diameter of the recess 32 in the connecting flange 7 preferably is in the range of 40 - 47 mm.

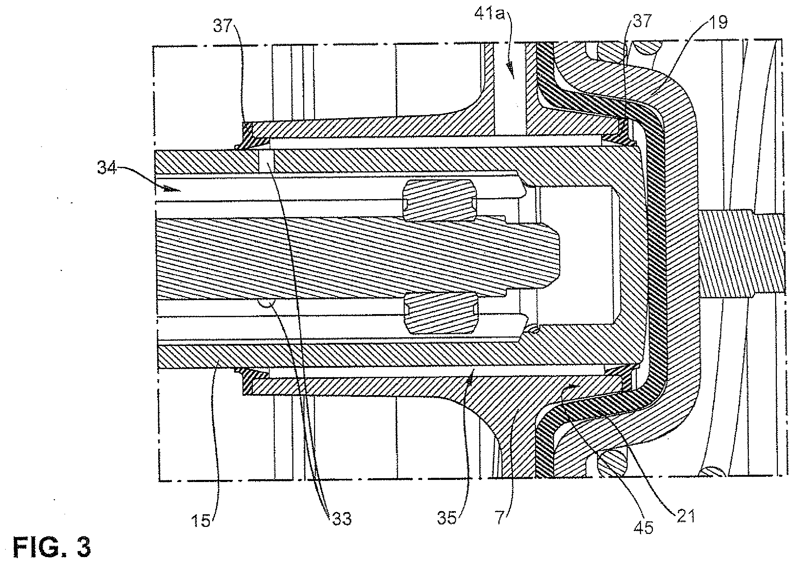

As can be seen from figure 3, the passage openings 33 between the inside volume 34 of the piston pipe 15 and the sealed cavity 35 between the connecting flange 7 and the piston pipe 15 are always within the boundaries defined by the sealing elements 37, regardless of the position of the spring brake piston 13 and piston pipe 15. Air transport is thus ensured irrespective of the position of the spring brake portion 3.

The service brake piston 19 comprises a recess 45 that is coaxially aligned with the piston pipe 15. The membrane 21 partially extends into the recess 45, as well as the piston pipe 15 and a portion of the connecting flange 7 to achieve an overall compact design. This design of the service brake piston 19 also makes it possible to move the sealing element 37 on the far end of the connecting flange 7 (on the right side in figure 3) comparatively far towards the service brake portion 5 of the spring brake actuator 1 to allow for sufficient space for the channel 41a without potential interference from the sealing element 37.

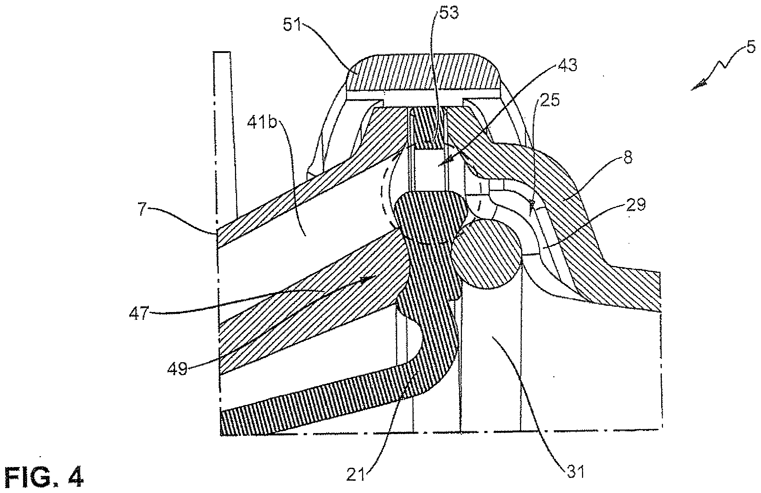

As can be seen in figure 4, the diaphragm 21 is sealingly held between a radial outer end portion 47 of the connecting flange 7 and the housing part 8 of the service brake portion 5. The radial outer end portion 47 comprises a mounting interface 49 against which the diaphragm 21 is firmly pressed by the pressure ring 31 which in turn is biased against the diaphragm 21 by a number of projections 29 formed on and extending inwardly away from the housing part 8. The connecting flange 7, diaphragm 21 and housing part 8 are firmly held together by a clamping element 51 such as a clamping ring.

The channel 41a,b opens into an annular chamber 53 which also forms part of the ventilation conduit C (cf. figure 2). The annular chamber 53 allows for a circumferential distribution of fluid passing through the channel section 41b, and passage opening 43, respectively.

By virtue of the projections 29, a clearance remains between the housing part 8 and the pressure ring 31 as well as the diaphragm 21 which allows for free passage of fluid, e.g. air, back and forth between the non-pressure chamber 25 and the spring chamber 9 (figures 1,2).

## Claims

1. A spring brake actuator (1) for a vehicle, in particular a commercial vehicle, comprising: a spring brake portion (3) and a service brake portion (5), wherein the spring brake portion (3) comprises a spring chamber (9) and a compression spring (12) mounted within the spring chamber (9), wherein the compression spring (12) is configured to generate a spring brake force, the service brake portion (5) comprises a pressure chamber (23) and a nonpressure chamber (25) separated from the pressure chamber (23) by a diaphragm (21), wherein the diaphragm (21) is elastically deformable upon pressure inside the pressure chamber (23), wherein the spring chamber (9) of the spring brake portion (3) and the non-pressure chamber (25) of the service portion are connected by at least one ventilation conduit (c) to be in fluid communication with each other, wherein the ventilation conduit (c) extends completely inside the spring brake actuator (1), **characterized in that** the spring brake portion (3) comprises - a piston chamber (14) and a spring brake piston (13) that sealingly abuts against a piston chamber wall, is mounted inside the piston chamber (14) and is slidably movable between a retained position and an extended position; and - a piston pipe (15) that is coupled to the spring brake piston (13) wherein the ventilation conduit runs inside the piston pipe (15).

2. The spring brake actuator (1) of claim 1, wherein the ventilation conduit (c) bypasses the pressure chamber (23).

3. The spring brake actuator (1) of any one of the preceding claims, wherein the spring brake portion (3) and the service brake portion (5) are mounted to a connecting flange (7), and the ventilation conduit (c) runs inside the connecting flange (7).

4. The spring brake actuator (1) of claim 3, wherein the connecting flange (7) slidably and sealingly holds the piston pipe (15), a sealed cavity (35) is formed in between the piston pipe (15) and the connecting flange (7), and forms part of the ventilation conduit (c).

5. The spring brake actuator (1) of claim 3 or 4, wherein the piston pipe (15) comprises at least one passage opening (33) that extends from inside the piston pipe (15) through to the connecting flange (7) and forms part of the ventilation conduit (C).

6. The spring brake actuator (1) of any one of claims 3 through 5, wherein the connecting flange (7) comprises at least one channel (41a,b) that is in fluid communication with the piston pipe, extends radially outwards to a mounting interface (49) for the diaphragm (21), and forms part of the ventilation conduit (c).

7. The spring brake actuator (1) of any one of claims 3 through 6, wherein the diaphragm (21) comprises a radial outer end portion that is sealingly attached to the mounting interface (49) of the connecting flange (7), and at least one passage opening (43) provided in the radial outer end portion and forming part of the ventilation conduit (C).

8. The spring brake actuator (1) of claim 7, wherein the diaphragm (21) is sealingly pressed against the mounting interface (49) by a pressure ring (31), wherein the pressure ring (31) is positioned radially inwards of the at least one passage opening (43) of the diaphragm (21).

9. The spring brake actuator (1) of claim 8, wherein the service brake portion (5) comprises a housing part (8) that is fixedly attached to the connecting flange (7).

10. The spring brake actuator (1) of claim 9, the housing part (8) having a plurality of projections (29) that extend inwardly away from the housing part (8) towards the pressure ring (31) and press the pressure ring (31) towards the diaphragm (21).

11. The spring brake actuator (1) of claim 9 or 10, wherein the connecting flange (7) and the housing part (4) of the service brake portion (5) are shaped such that they form a substantially annular chamber (53) between them, wherein the annular chamber (53) forms part of the ventilation conduit (C).

12. The spring brake actuator (1) of any one of claims 3 through 11, wherein the service brake portion (5) has a service brake piston (19), the service brake piston (19) being positioned adjacent to the diaphragm (21) and having a recess (45) configured to receive a portion of the diaphragm (21) and the piston pipe (15) of the spring brake piston (13).

13. The spring brake actuator (1) of claim 12, wherein the connecting flange (7) partially extends into the recess (45) provided in the service brake piston (19).

## Patentansprüche

1. Federbremsaktuator (1) für ein Fahrzeug, insbesondere ein Nutzfahrzeug, umfassend: einen Federbremsenabschnitt (3) und einen Betriebsbremsenabschnitt (5), wobei der Federbremsenabschnitt (3) eine Federkammer (10) und eine in der Federkammer (10) montierte Druckfeder (12) umfasst, wobei die Druckfeder (12) dazu ausgelegt ist, eine Federbremskraft zu erzeugen, wobei der Betriebsbremsenabschnitt (5) eine Druckkammer (23) und eine von der Druckkammer (23) durch eine Membran (21) getrennte drucklose Kammer (25) umfasst, wobei die Membran (21) bei Druck innerhalb der Druckkammer (23) elastisch verformbar ist, wobei die Federkammer (9) des Federbremsenabschnitts (3) und die drucklose Kammer (25) des Betriebsabschnitts durch mindestens eine Belüftungsleitung (c) verbunden sind, um in Fluidverbindung miteinander zu stehen, wobei sich die Belüftungsleitung (c) vollständig innerhalb des Federbremsaktuators (1) erstreckt, **dadurch gekennzeichnet, dass** der Federbremsenabschnitt (3) Folgendes umfasst - eine Kolbenkammer (14), und wobei ein Federbremskolben (13), der abdichtend an einer Kolbenkammerwand anliegt, innerhalb der Kolbenkammer (14) montiert ist und verschiebbar zwischen einer zurückgehaltenen Position und einer ausgefahrenen Position bewegbar ist; und - ein Kolbenrohr (15), das mit dem Federbremskolben (13) gekoppelt ist, wobei die Belüftungsleitung innerhalb des Kolbenrohrs (15) verläuft.

2. Federbremsaktuator (1) nach Anspruch 1, wobei die Belüftungsleitung (c) die Druckkammer (23) umgeht.

3. Federbremsaktuator (1) nach einem der vorhergehenden Ansprüche, wobei der Federbremsenabschnitt (3) und der Betriebsbremsenabschnitt (5) an einem Verbindungsflansch (7) montiert sind und die Belüftungsleitung (c) innerhalb des Verbindungsflanschs (7) verläuft.

4. Federbremsaktuator (1) nach Anspruch 3, wobei der Verbindungsflansch (7) das Kolbenrohr (15) verschiebbar und abdichtend hält, wobei ein abgedichteter Hohlraum (35) zwischen dem Kolbenrohr (15) und dem Verbindungsflansch (7) gebildet ist und einen Teil der Belüftungsleitung (c) bildet.

5. Federbremsaktuator (1) nach Anspruch 3 oder 4, wobei das Kolbenrohr (15) mindestens eine Durchgangsöffnung (33) umfasst, die sich von einem Inneren des Kolbenrohrs (15) durch den Verbindungsflansch (7) erstreckt und einen Teil der Belüftungsleitung (C) bildet.

6. Federbremsaktuator (1) nach einem der Ansprüche 3 bis 5, wobei der Verbindungsflansch (7) mindestens einen Kanal (41a,b) umfasst, der in Fluidverbindung mit dem Kolbenrohr steht, sich radial nach außen zu einer Montageschnittstelle (49) für die Membran (21) erstreckt und einen Teil der Belüftungsleitung (c) bildet.

7. Federbremsaktuator (1) nach einem der Ansprüche 3 bis 6, wobei die Membran (21) einen radialen äußeren Endabschitt umfasst, der abdichtend an der Montageschnittstelle (49) des Verbindungsflanschs (7) angebracht ist, und wobei mindestens eine Durchgangsöffnung (43) in dem radialen äußeren Endabschnitt bereitgestellt ist und einen Teil der Belüftungsleitung (C) bildet.

8. Federbremsaktuator (1) nach Anspruch 7, wobei die Membran (21) durch einen Druckring (31) abdichtend gegen die Montageschnittstelle (49) gedrückt wird, wobei der Druckring (31) von der mindestens einen Durchgangsöffnung (43) der Membran (21) radial nach innen positioniert ist.

9. Federbremsaktuator (1) nach Anspruch 8, wobei der Betriebsbremsenabschnitt (5) einen Gehäuseteil (8) umfasst, der fest an dem Verbindungsflansch (7) angebracht ist.

10. Federbremsaktuator (1) nach Anspruch 9, wobei der Gehäuseteil (8) eine Mehrzahl von Vorsprüngen (29) aufweist, die sich nach innen weg von dem Gehäuseteil (8) hin zu dem Druckring (31) erstrecken und den Druckring (31) hin zu der Membran (21) drücken.

11. Federbremsaktuator (1) nach Anspruch 9 oder 10, wobei der Verbindungsflansch (7) und der Gehäuseteil (4) des Betriebsbremsenabschnitts (5) derart geformt sind, dass sie eine im Wesentlichen ringförmige Kammer (53) zwischen sich bilden, wobei die ringförmige Kammer (53) einen Teil der Belüftungsleitung (C) bildet.

12. Federbremsaktuator (1) nach einem der Ansprüche 3 bis 11, wobei der Betriebsbremsenabschnitt (5) einen Betriebsbremskolben (19) aufweist, wobei der Betriebsbremskolben (19) angrenzend an die Membran (21) positioniert ist und eine Aussparung (45) aufweist, die dazu ausgelegt ist, einen Abschnitt der Membran (21) und das Kolbenrohr (15) des Federbremskolbens (13) aufzunehmen.

13. Federbremsaktuator (1) nach Anspruch 12, wobei sich der Verbindungsflansch (7) teilweise in die in dem Betriebsbremskolben (19) bereitgestellte Aussparung (45) erstreckt.

## Revendications

1. Actionneur de frein à ressort (1) pour véhicule, en particulier un véhicule utilitaire, comprenant : une portion de frein à ressort (3) et une portion de frein de service (5), la portion de frein à ressort (3) comprenant une chambre de ressort (10) et un ressort de compression (12) monté au sein de la chambre de ressort (10), le ressort de compression (12) étant configuré pour générer une force de frein à ressort, la portion de frein de service (5) comprenant une chambre de pression (23) et une chambre de non-pression (25) séparée de la chambre de pression (23) par un diaphragme (21), le diaphragme (21) étant élastiquement déformable lors d'une pression à l'intérieur de la chambre de pression (23), la chambre de ressort (9) de la portion de frein à ressort (3) et la chambre de non-pression (25) de la portion de service étant raccordées par au moins un conduit de ventilation (c) pour être en communication fluidique l'une avec l'autre, le conduit de ventilation (c) s'étendant complètement à l'intérieur de l'actionneur de frein à ressort (1), **caractérisé en ce que** la portion de frein à ressort (3) comprend - une chambre de piston (14) et un piston de frein à ressort (13) qui vient en butée de façon hermétique contre une paroi de chambre de piston, est monté à l'intérieur de la chambre de piston (14) et est mobile de façon coulissante entre une position retenue et une position étendue ; et - un tuyau de piston (15) qui est couplé au piston de frein à ressort (13), le conduit de ventilation cheminant à l'intérieur du tuyau de piston (15).

2. Actionneur de frein à ressort (1) selon la revendication 1, dans lequel le conduit de ventilation (c) contourne la chambre de pression (23).

3. Actionneur de frein à ressort (1) selon l'une quelconque des revendications précédentes, dans lequel la portion de frein à ressort (3) et la portion de frein de service (5) sont montées sur une bride de raccordement (7), et le conduit de ventilation (c) chemine à l'intérieur de la bride de raccordement (7).

4. Actionneur de frein à ressort (1) selon la revendication 3, dans lequel la bride de raccordement (7) maintient de façon coulissante et hermétique le tuyau de piston (15), une cavité hermétique (35) est formée entre le tuyau de piston (15) et la bride de raccordement (7), et fait partie du conduit de ventilation (c).

5. Actionneur de frein à ressort (1) selon la revendication 3 ou la revendication 4, dans lequel le tuyau de piston (15) comprend au moins une ouverture de passage (33) qui s'étend depuis l'intérieur du tuyau de piston (15) à travers la bride de raccordement (7) et fait partie du conduit de ventilation (C).

6. Actionneur de frein à ressort (1) selon l'une quelconque des revendications 3 à 5, dans lequel la bride de raccordement (7) comprend au moins un canal (41a, b) qui est en communication fluidique avec le tuyau de piston, s'étend radialement vers l'extérieur jusqu'à une interface de montage (49) pour le diaphragme (21), et fait partie du conduit de ventilation (c).

7. Actionneur de frein à ressort (1) selon l'une quelconque des revendications 3 à 6, dans lequel le diaphragme (21) comprend une portion d'extrémité externe radiale qui est attachée de façon hermétique à l'interface de montage (49) de la bride de raccordement (7), et au moins une ouverture de passage (43) ménagée dans la portion d'extrémité externe radiale et faisant partie du conduit de ventilation (C).

8. Actionneur de frein à ressort (1) selon la revendication 7, dans lequel le diaphragme (21) est pressé de façon hermétique contre l'interface de montage (49) par une bague de pression (31), la bague de pression (31) étant positionnée radialement vers l'intérieur de l'au moins une ouverture de passage (43) du diaphragme (21).

9. Actionneur de frein à ressort (1) selon la revendication 8, dans lequel la portion de frein de service (5) comprend une partie logement (8) qui est attachée de façon fixe à la bride de raccordement (7).

10. Actionneur de frein à ressort (1) selon la revendication 9, la partie logement (8) ayant une pluralité de saillies (29) qui s'étendent vers l'intérieur et à l'écart de la partie logement (8) en direction de la bague de pression (31) et pressent la bague de pression (31) en direction du diaphragme (21).

11. Actionneur de frein à ressort (1) selon la revendication 9 ou la revendication 10, dans lequel la bride de raccordement (7) et la partie logement (4) de la portion de frein de service (5) sont profilées de telle sorte qu'elles forment une chambre substantiellement annulaire (53) entre elles, la chambre annulaire (53) faisant partie du conduit de ventilation (C).

12. Actionneur de frein à ressort (1) selon l'une quelconque des revendications 3 à 11, dans lequel la portion de frein de service (5) a un piston de frein de service (19), le piston de frein de service (19) étant positionné adjacent au diaphragme (21) et ayant un évidement (45) configuré pour recevoir une portion du diaphragme (21) et du tuyau de piston (15) du piston de frein à ressort (13).

13. Actionneur de frein à ressort (1) selon la revendication 12, dans lequel la bride de raccordement (7) s'étend partiellement dans l'évidement (45) ménagé dans le piston de frein de service (19).
